# EUROPEAN PATENT SPECIFICATION

(11) **EP 2 363 802 B1**
(45) Date of publication and mention of the grant of the patent: **07.03.2018**
(21) Application number: 11152807.1
(22) Date of filing: 31.01.2011
(51) Int. Cl.: G06F 9/44

(54) **An electronic device and method for providing user interface thereof**
Elektronische Vorrichtung und Verfahren zur Bereitstellung der Benutzerschnittstelle davon
Dispositif électronique et son procédé de fourniture d'une interface d'utilisateur

(30) Priority: 05.02.2010 KR 20100011231
(43) Date of publication of application: 07.09.2011
(73) Proprietor: LG ELECTRONICS INC., Yeongdeungpo-gu Seoul 150-721 (KR)
(72) Inventor: Lee, Jae Hak, Gyeonggi-do 451-731 (KR); Cho, Yong Bum, Gyeonggi-do 451-731 (KR); Kim, Uni Young, Gyeonggi-do 451-731 (KR); Kim, Sung Soo, Gyeonggi-do 451-731 (KR); Joo, Young Sun, Gyeonggi-do 451-731 (KR); Shin, Sang Hyeon, Gyeonggi-do 451-731 (KR)
(74) Representative: Cabinet Plasseraud

(56) References cited:
- EP-A1- 2 088 500
- WO-A2-2009/122214
- US-A1- 2004 113 915
- US-A1- 2009 271 365
- US-B1- 7 441 201

## Description

### BACKGROUND OF THE INVENTION

### Field of the Invention

The present invention relates to an electronic device and method for providing a User Interface (UI) thereof.

### Discussion of the Related Art

Analog broadcast environments have been rapidly transitioned to digital broadcast environments. In the digital broadcast environments, the amount of content is considerably increased and the type of content is diversified, as compared to an analog broadcast environment of the related art. In particular, recently, production of three-dimensional (3D) content which provides realism and stereoscopic effect has increased. Research into an electronic apparatus for enabling a user to view 3D content has also been conducted.

In spite of variation in broadcast environment, in an electronic device of the related art, all User Interfaces (UIs) were two-dimensionally configured in an On-Screen Display (OSD) manner. However, there is a limitation in the two-dimensional configuration of the UIs. Since information is displayed in a planar fashion, a user feels inconvenience in recognition and use of a UI.

For example, if a UI including much information or a UI including a main menu and a sub menu displayed in a planar fashion is provided, the menus may overlap each other or the main screen which is being viewed may be hidden. For this reason, a manufacturer of an electronic device has a limitation in UI configuration and design. Thus, the manufacturer cannot satisfy consumer demand, thereby adversely affecting sales of the electronic device.

WO 2009/122214 A2 discloses a method of presenting objects in stereoscopic 3D displays using a multilayer graphical user interface and rules for a "pseudo-stereoscopic" 3D effect. US 7 441 201 B1 discloses the creation of a 3D user interface for a software program based on a number of 2D GUI components.

EP 2 088 500 A1 discloses providing a user interface in a computing device by arranging a plurality of components in a plurality of layers.

### SUMMARY OF THE INVENTION

Accordingly, the present invention is directed to an electronic device and a method for providing a User Interface (UI) that substantially obviate one or more problems due to limitations and disadvantages of the related art.

An object of the present invention is to provide an electronic device for providing a UI which appears to protrude from a screen in a Z-axis direction in a multilayer structure such that a user can easily recognize and conveniently use the UI.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a method for providing a User Interface (UI) in an electronic device according to claim 1 is proposed.

In another aspect of the present invention, an electronic device for providing a User Interface (UI) is defined in claim 6.

In the present invention, by providing a 3D UI configured in a multilayer structure to a user, it is possible to enable to the user to easily recognize and conveniently use the UI, to increase good feeling and consumer demand for a product, and to improve competitiveness of a device.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a block diagram showing the configuration of an electronic device according to an embodiment of the present invention;
FIG. 2 is a diagram illustrating perspective according to a disparity between left image data and right image data;
FIG. 3 is a diagram illustrating an example of a method of implementing a User Interface (UI) in three dimensions (3D) according to the present invention;
FIG. 4 is a diagram illustrating an example of a UI configured according to the present invention;
FIG. 5 is a diagram illustrating another example of a UI configured according to the present invention;
FIG. 6 is a diagram illustrating another example of a UI configured according to the present invention;
FIG. 7 is a diagram illustrating another example of a UI configured according to the present invention;
FIG. 8 is a diagram illustrating an example of indication information configured according to the present invention; and
FIGs. 9 and 10 are flowcharts illustrating a method for controlling a UI according to the present invention.

### DETAILED DESCRIPTION OF THE INVENTION

In addition, although the terms used in the present invention are selected from generally known and used terms, some of the terms mentioned in the description of the present invention have been selected by the applicant at his or her discretion, the detailed meanings of which are described in relevant parts of the description herein. Furthermore, it is required that the present invention be understood not simply by the actual terms used but by the meanings of each term lying within.

The present invention relates to an electronic device and method for providing a User Interface (UI) thereof, which are capable of enabling a user of the electronic device to easily recognize and use the UI. Hereinafter, the embodiments of the present invention will be described in detail with reference to the accompanying drawings.

Hereinafter, in the present disclosure, for convenience of description and better understanding of the present invention, an electronic device 100 may be a personal computer system such as a desktop, a laptop, a tablet or a handheld personal computer (PC). In addition, the electronic device 100 may be a mobile terminal such as a mobile telephone, a smart phone, a Personal Digital Assistants (PDA), a Portable Multimedia Player (PMP) or a navigation device or a fixed terminal such as a digital TV receiver. Such an electronic device may configure and provide a UI in a three-dimensional (3D) format such that a user can easily recognize and use the UI. The UI configured in the 3D format may be, for example, formed in a layered structure, arranged from a screen in a specific direction, or formed by a combination thereof. Various embodiments of the UI configuration for convenience of the user according to the present invention will be described in detail below.

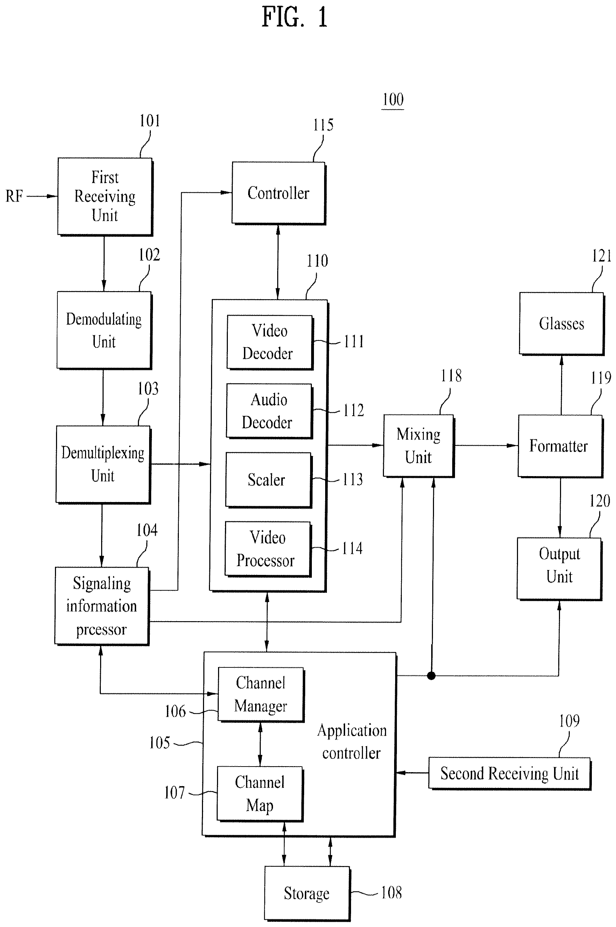

FIG. 1 is a block diagram showing the configuration of an electronic device according to an embodiment of the present invention.

An example of the electronic device for providing the UI according to the present invention may include a receiving unit configured to receive a request for provision of a UI, a controller configured to collect information for configuring the requested UI, classify the collected information according to a first criterion so as to generate a plurality of pages, hierarchize the generated pages, and arrange the layers according to a second criterion so as to form a multilayer UI, and an output unit configured to provide the multilayer UI as the requested UI.

Referring to FIG. 1, the electronic device 100 according to the present invention includes a first receiving unit 101, a demodulating unit 102, a demultiplexing unit 103, a signaling information processor 104, an application controller 105, a storage unit 108, a second receiving unit 109, a decoding unit 110, a controller 115, a mixing unit 118, a formatter 119, and an output unit 120.

Some components of the electronic device 100 shown in FIG. 1 may be modified or omitted or other components may be added to the electronic device 100 according to the types and properties of the device. For example, the electronic device 100 may further include a network interface unit configured to receive or transmit packets over a network. In this case, the electronic device 100 may receive Internet Protocol (IP) packets for delivering audio/video data, signaling information and data for UI configuration from a transmitter such as a service provider or a content provider through the network interface unit. The signaling information may include Program Specific Information/Program and System Information Protocol (PSI/PSIP) information or Digital Video Broadcasting-Service Information (DVB-SI). In addition, the electronic device 100 may be implemented in the form of a set-top box (STB) without the output unit 120. In this case, the electronic device 100 may output a variety of data such as the UI configured according to the present invention and an actual image to the output unit 120. If the electronic device 100 is a mobile terminal such as a smart phone, the electronic device 100 may output a variety of data to an output unit having a size greater than the output unit of the terminal. If the output unit is separated from the electronic device 100 and a separate output unit is used, a wired/wireless communication protocol may be used and an interface therefor may be further included.

The first receiving unit 101 receives a signal including a variety of data through a tuned channel or a network interface unit. The data may have different data structures according to the format of the signal and includes at least one of A/V data, signaling information and UI data. In some cases, the first receiving unit 101 may be controlled by a channel manager 106. The demodulating unit 102 demodulates the signal using a demodulation method corresponding to a modulation method of the received signal. The first receiving unit 101 and the demodulating unit 102 may be configured as one module in the system. In addition, if the electronic device is of a hybrid type, a plurality of first receiving units 101 and demodulating units 102 may be included, thereby receiving signals having various formats.

The demultiplexing unit 103 demultiplexes the signal, for example, the A/V data and the signaling information. Demultiplexing may be performed through Packet Identifier (PID) filtering. The demultiplexing unit 103 outputs the demultiplexed A/V data to the decoder 110 and outputs the demultiplexed signaling information to the signaling information processor 104. Although not shown, a multiplexing unit configured to multiplex signals using a predetermined method and outputting the multiplexed signal to a Conditional Access System (CAS) unit (e.g., a cable card or a Point of Deployment (POD) module) may be included in a front stage of the demultiplexing unit 103, in order to perform a CAS process with respect to the signal passing through the plurality of first receiving units and demodulating units. The predetermined method may be, for example, a method of attaching separate identifiers to signal streams or packets and multiplexing the signals. In the case where the multiplexing unit is included, an external device may perform the CAS process with respect to the signal output from the multiplexing unit and the demultiplexing unit 103 may receive and demultiplex the signal subjected to the CAS process. The electronic device 100 may download and utilize a Downloadable CAS (DCAS) module from a server, in order to perform the CAS process.

The signaling information processor 104 processes the input signaling information and outputs the processed signaling information to the application controller 105, the controller 115 and the mixing unit 118. The signaling information processor 104 may temporarily store the processed signaling information in a database (not shown). The signaling information may include type information indicating whether specific data included in the received signal is a two-dimensional (2D) image or a 3D image. Accordingly, the signaling information processor 104 may parse and decode the type information and transmit information for determining whether or not the received data is a 3D image based on the decoded type information to the controller 115 or transmit the decoded type information to the controller 115 such that the controller 115 appropriately controls the data. If the type information is not included in the signaling information, the result alone may be transmitted to the controller 115.

The application controller 105 may include a channel manager 106, a channel map 107 and a UI data generator. The application controller 105 may further include a second receiving unit 109 or may interface with the second receiving unit 109. The channel manager 106 may generate and manage the channel map 107 based on channel information in the signaling information and provide information for channel switching or (broadcast) guide configuration according to a user request received through the second receiving unit 109. The UI data generator may read and transmit UI data stored in the storage unit 108 to the controller 115 or may directly configure the UI according to the present invention. In this case, the UI may be displayed in an On Screen Display (OSD) manner.

The decoder 110 includes a video decoder 111, an audio decoder 112, a scaler 113 and a video processor 114. The video/audio decoder 111/112 decodes input video/audio data. The scaler 113 scales the video/audio data processed by the video/audio decoder 111/112 to a signal having a size suitable for an output format. The video processor 114 processes the video data decoded by the video decoder 111 according to the output format or identifies the type of the input video data according to a control signal of the controller 115. The video processor 114 may identify the type of the video data if the above-described type information is not included or it is difficult to identify the type of the input video data by the type information.

The controller 115 controls the decoder 110 to appropriately process the video data based on the type information received from the signaling information processor 104 or the information about the type of the video data identified by the video processor 114. The controller 115 controls to configure the UI according to the present invention based on the stored UI data according to various user requests. The controller 115 may control the overall system.

The application controller 105 receives user input through the second receiving unit 109. The user input may include a physical button of an input device such as a remote controller or a front end of the electronic device, a touch operation using a touch screen, a predetermined gesture recognized from an image captured by an imaging unit and predetermined voice recognized by voice recognition. Examples of the user input include a request for provision of a channel or favorite channel UI, a recording or reserved-recording UI, a channel browser UI, a broadcast guide UI, or a specific event UI. When the request for provision of the UI is received, the application controller 105 may transmit the request for provision of the UI to the controller 115 or directly configure the UI in response to the request for provision of the UI. The application controller 105 receives data necessary for configuring the UI from the storage unit 108 and/or a transmitter through the first receiving unit 101, configures the UI, and provides the UI to a user through the output unit. The application controller 105 may update the data for configuring the UI based on newest information if specific information is repeated or contradicted when the UI is configured. The application controller 105 may refer to broadcast guide information, recording/reserved-recording information, type information, size information, depth information, disparity information and position information in order to configure the UI. The broadcast guide information may be collected from the signaling information, the size information may indicate the size of the UI, the depth information may indicate the depth value of a stereoscopic image, the disparity information may indicate the disparity value of a disparity between the left image data and the right image data configuring the stereoscopic image and the position information may indicate the position of the UI which will be displayed on the screen. The size information, the depth information, disparity information and the position information may be set by the user or may be set by the application controller 105 or the controller 115.

In the present invention, the UI data generator configured to configure the UI may be configured separately from the application controller 105. In the present invention, the UI data generator will be described in greater detail in the use scenario part of the UI and a detailed description thereof is omitted herein. In the present invention, the function of the application controller 105 may be performed by the controller 115.

The storage unit 108 may store a set of UI data for UI provision in advance. The set of UI data may include a first set of pixel data for a left-view image and a second set of pixel data for a right-view image. That is, the first set of pixel data and the second set of pixel data are used to display the UI in the form of a stereoscopic image. The storage unit 108 may store supplementary information associated with a receiver.

The mixing unit 118 mixes the signals output from the signaling information processor 104, the decoder 110 and the application controller 105 or the controller 115 and outputs the mixed data. For example, the mixing unit 118 may mix UI data with the received video data and output the mixed data. Accordingly, the output unit 120 outputs the video data mixed with the UI data.

The formatter 119 configures the output of the mixing unit 118 to suit the output format of the output unit 120. The formatter 119 may operate, for example, as a 3D formatter for bypassing a 2D image and processing a 3D image to suit a 3D format such as an output frequency of the output unit 120 under the control of the controller 115 or the application controller 105. The formatter 119 may configure the UI data input through the mixing unit 118 or the application controller 105 or the controller 105 into a 3D image under the control of the application controller 105 or the controller 115.

The output unit 120 outputs a variety of content such as A/V data and the UI configured according to the present invention. The output unit 120 includes a display unit for outputting an image, for example, a 2D image and a 3D image, and a speaker for outputting audio synchronized with the image. The output unit 120 may output the image information and the audio information included in the UI configured according to the present invention.

In the present disclosure, various scenarios for providing the UI configured in 3D according to the present invention will be described. Information necessary for providing the UI according to the present invention may be received from an external server, a production server or a homepage over a network and may be provided.

In the present disclosure, a method of displaying a 3D image includes a glasses method and a non-glasses method. The glasses method is divided into a passive type and an active type. In the passive type, a left image and a right image are separately displayed using a polarization filter. Alternatively, a method of using glasses having a blue-color lens and a red-color lens is also included in the passive type. In the active type, left and right eyes are identified using a liquid crystal shutter and the left eye and the right eye are hidden in time series so as to identify a left image and a right image. That is, in the active type, the temporally divided screen is periodically repeated and glasses having an electronic shutter synchronized with the period are used. The active type is also referred to as a time split type or a shuttered glasses type. Representative examples of the non-glasses method include a lenticular method in which a lenticular lens plate in which a cylindrical lens array is vertically arranged is provided in front of an image panel and a parallax barrier method including a barrier layer having a periodic slit on an image panel. Hereinafter, for example, a stereoscopic method and a glasses method will be described as the 3D display method. The present invention is not limited to the above-described methods.

The formatter 119 outputs the 3D image data to the output unit 120 if necessary and generates a synchronization signal (Vsync) in order to perform synchronization when a user views the output 3D image data with glasses 121. The formatter 119 outputs the Vsync to an IR emitter (not shown) included in the glasses such that the user views the 3D image data output through the glasses 121. The IR emitter receives the Vsync generated by the formatter 119 and outputs the Vsync to a light receiving unit (not shown) included in the glasses 121. The period of the glasses 121 is adjusted according to the Vsync of the formatter 119 received through the light receiving unit so as to perform synchronization with the 3D image data output from the output unit 120.

Hereinafter, the method of configuring the UI in 3D according to the present invention will be briefly described.

The electronic device 100 may process the 3D image data based on the principle of the stereoscopic method. That is, one object is photographed using two cameras located at different positions so as to generate left image data and right image data, the left image data and the right image data are respectively orthogonally input to the left eye and the right eye of a viewer, and the left image data and the right image data respectively input to the left eye and the right eye are combined by the brain, thereby generating a 3D image. The arrangement of the left image data and the right image data to be orthogonal to each other indicates that the left image data and the right image data do not cause mutual interference.

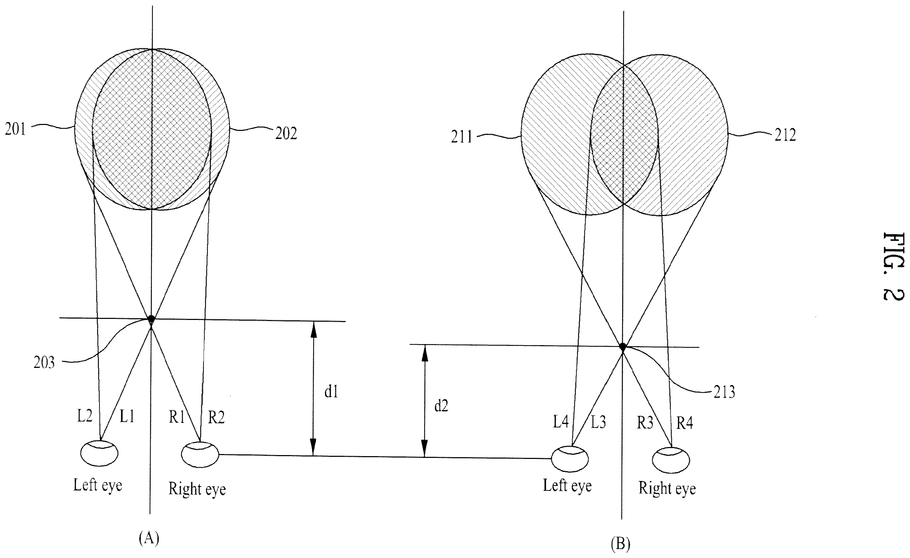

FIG. 2 is a diagram illustrating perspective according to a disparity between left image data and right image data.

FIG. 2A shows the position 203 of an image formed by the right image data 201 and the left image data 202 if the disparity (or a gap) between the right image data 201 and the left image data 202 is small, and FIG. 2B shows the position 213 of an image formed by the right image data 201 and the left image data 202 if the disparity between the right image data 201 and the left image data 202 is large.

That is, FIGs. 2A and 2B show perspective degrees of images formed at different positions according to the disparity between the left image data and the right image data in the image processing apparatus.

Referring to FIG. 2A, when extensions R1 and R2 from the right eye to one side and the other side of the right image data 201 and extensions L1 and L2 from the left eye to one side and the other side of the left image data 202 are drawn, an image is formed at a point 203 where the extension R1 of the right image data and the extension L1 of the left image data cross each other at a position separated from the right eye and the left eye by a predetermined distance d1.

Referring to FIG. 2B, an image is formed at a point 213 where the extension R3 of the right image data and the extension L3 of the left image data cross each other at a position separated from the right eye and the left eye by a predetermined distance d2, similar to FIG. 2A.

When the distances d1 (FIG. 2A) and d2 (FIG. 2B) between the left and right eyes and the positions 203 and 213 where the images are formed are compared, d1 is greater than d2. That is, the image shown in FIG. 2A is formed at a position further from the left and right eyes than the position of the image shown in FIG. 2B. The reason why the distances d1 and d2 are different is because the disparities between the right image data and the left image data are different. For example, the disparity between the right image data 201 and the left image data 202 of FIG. 2A is narrower than the disparity between the right image data 203 and the left image data 204 of FIG. 2B. Therefore, as can be seen from FIGs. 2A and 2B, as the disparity between the right image data and the left image data is reduced, the distance between the image formed by the left image data and the right image data and the person's eyes is increased.

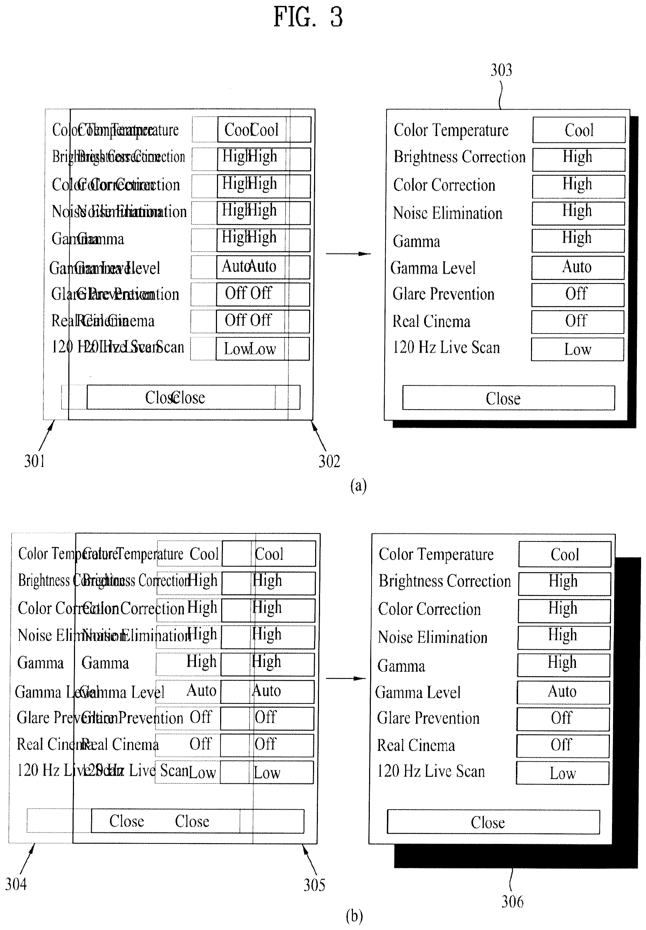

Based on the above-described principle, the UI may be configured in 3D or only a specific item in the UI may be configured in 3D as shown in FIGs. 3A and 3B.

FIG. 3 is a diagram illustrating an example of a method of implementing a UI in 3D according to the present invention.

FIGs. 3A and 3B show the cases where the UI including a plurality of items is implemented in 3D, wherein FIG. 3A shows the case where the disparity between the left image data 301 and the right image data 302 configuring the UI is narrow and FIG. 3B shows the case where the disparity between the left image data 304 and the right image data 305 configuring the UI is wide.

Accordingly, in the 3D UIs 303 and 306 implemented according to the disparity between the right image data and the left image data of FIGs. 3A and 3B, based on the principle of FIG. 2, the 3D UI 303 shown in FIG. 3A appears to be located a long distance from the person's eyes and the 3D UI 306 shown in FIG. 3B appears to be located a short distance from the person's eyes, that is, appears to protrude. Based upon the above-described principle, that is, by adjusting the disparity between the left image data and the right image data configuring the UI, it is possible to give appropriate depth to the UI so as to obtain a 3D effect.

The UI of the electronic device of the related art is generally configured in a 2D format. In the UI of the 2D format, since the relationship between the components configuring the UI is horizontal, it is difficult to recognize the UI or the components of the UI. Thus, use convenience deteriorates.

In order to solve the problems of the electronic device of the related art, that is, in order to enable the user to easily recognize and conveniently use the UI, in the present invention, a UI having a multilayer structure is provided. In the UI having the multilayer structure according to the present invention, pages configuring the UI are hierarchized and the hierarchized pages are arranged according to a specific criterion, displayed to protrude from a screen in a specific direction, and provided to the user. Although the specific direction is a Z-axis direction in the present disclosure, the present invention is not limited thereto and any one of X-, Y- and Z-axis directions may be used according to a coordinate set for recognition and use convenience of the user for the UI. In the present disclosure, according to the present invention, the UI having the multilayer structure, such as a channel UI, a favorite channel UI, a recording list UI, a reserved-recording UI, a channel browser UI or a broadcast guide UI, will be described.

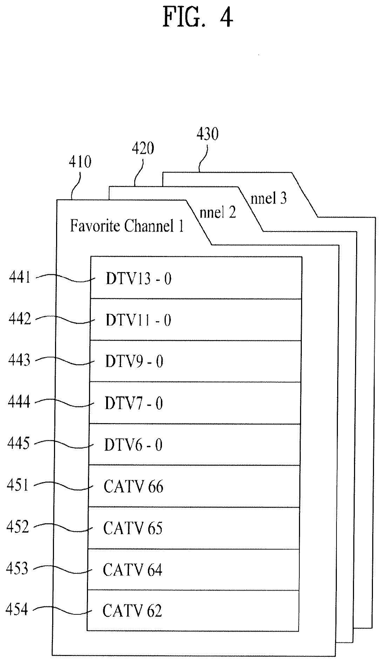

FIG. 4 is a diagram illustrating an example of a UI configured according to the present invention.

In FIG. 4, an example of a channel list or favorite channel list UI configured in a multilayer structure according to the present invention is disclosed. The electronic device 100 may hierarchize pages configuring the channel list or favorite channel list UI and configure a higher level layer to appear to protrude from the screen in the Z-axis direction. The electronic device 100 may hierarchize the pages in the Z-axis direction by adjusting the disparity between the left image data and the right image data of each page as shown in FIGs. 2 and 3. The electronic device 100 may control the degrees of clearness of the layers to be the same or may control the degrees of clearness of the layers to be different in order to increase the UI recognition of the user if necessary. For example, the electronic device 100 decreases the degree of clearness of the higher-level layer and the increases degree of clearness of the lower-level layer. In this case, the degree of clearness of an uppermost-level layer which the user initially encounters is lowest, enabling that the user to easily recognize the page. The electronic device 100 may configure page information of each layer to be more easily selected or recognized. For example, the electronic device 100 may configure the layers such that at least parts of the IDs of the layers do not overlap each other, thereby conveniently accessing layers other than the uppermost-level layer.

Referring to FIG. 4, for example, the favorite channel list UI having three layers is shown. A favorite channel 1 page is disposed on an uppermost-level layer 410, a favorite channel 2 page is disposed on a next higher-level layer 420 and a favorite channel 3 page is disposed on a last layer 430. The order of the pages disposed on the layers may be set by the user or may be automatically set according to a predetermined criterion. The favorite channel 1 page of each layer, for example, the uppermost-level layer 410 includes a plurality of items 441 to 444 and 451 to 454 and each item provides favorite channel information. The favorite channel information includes information for identifying whether the favorite channel information of the item is information about a terrestrial wave, a cable or an internet protocol television (IPTV) and a virtual channel number. At this time, the favorite channel information may be provided along with program information of the virtual channel. The program information may include current broadcast program information of the virtual channel or may include current broadcast program information and future program information. The program information may include, for example, at least one of a program start time and end time, a duration, a program title, a thumbnail image and detailed program information. If a channel of a specific item is selected, program information which is currently broadcasted through the virtual channel, detailed information about the program or the virtual channel, thumbnail image of the program or the virtual channel, or Electronic Program Guide (EPG) information (including the current program information and the future program information) of the channel. The items of the page of the uppermost-level layer 410 may be divisionally provided with different colors according to a predetermined criterion, for example, a genre or a medium. Among the plurality of items of the layer, an item selected by the user may be provided differently from the other items in terms of a color, a degree of clearness, or a size. Information about each layer or the page of the layer may be divided and provided according to users. For example, the uppermost-level layer may provide the favorite channel information of USER 1 and a next layer may provide the favorite channel information of USER 2. If each item configuring the page of a specific layer is selected according to a user request, the priority of the channel corresponding thereto may be changed, the channel corresponding thereto may be deleted from the favorite channel, or immediate recording or reserved-recording of a specific program of the channel corresponding thereto may be set.

As described above, if a plurality of channel lists or favorite channel list pages is present, the electronic device 100 may not horizontally provide the channel lists or the favorite channel list pages as in the related art but may provide the channel lists or the favorite channel list pages arranged on the screen in a layered structure in the Z-axis direction as shown in FIG. 4, thereby enabling the user to easily recognize and use the UI. Although the channel list or favorite channel list UI is shown in FIG. 4, a broadcast guide screen may be configured and provided as shown in FIG. 4.

If the user requests the favorite channel 2 page of a next layer of the favorite channel 1 page disposed on the uppermost-level layer 410 as shown in Fig. 4, the requested favorite channel 2 page of the layer may become an uppermost-level layer and the favorite channel 1 page of the uppermost-level layer may move to the last layer. In this case, the electronic device may apply predetermined disparities between the layers in the Z-axis direction and degrees of clearness to the pages of the changed layers. In this case, a pointing device or a gesture (or a gesture input tool) and voice may be used and the electronic device operates the receiving unit and the controller in response thereto.

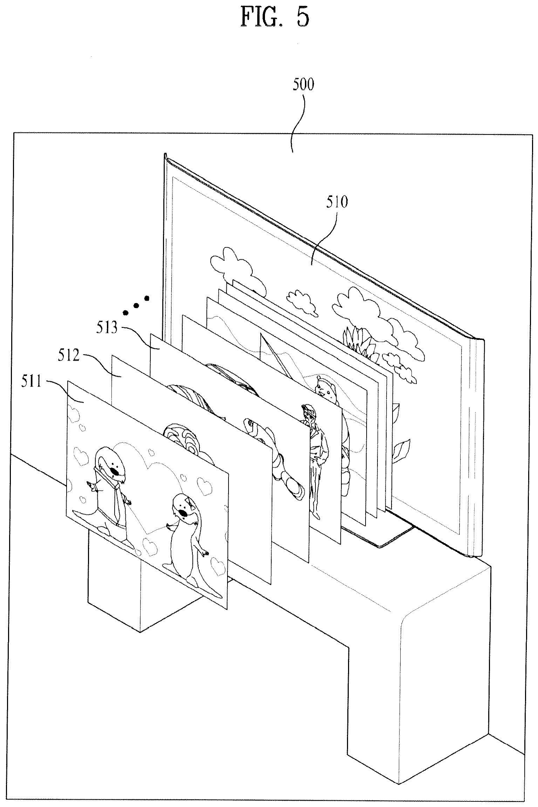

FIG. 5 is a diagram illustrating another example of a UI configured according to the present invention.

FIG. 5 shows an example of a recording list or reserved-recording list UI configured in a multilayer structure according to the present invention.

The electronic device 100 receives a request for provision of the recording list or reserved-recording list UI from the user and collects information associated with the request for the provision of the UI. As described above, the information may be obtained from information (including signaling information) stored in the storage unit or a transmitter. If a plurality of pieces of information is collected, the electronic device 100 hierarchizes the information as shown in FIG. 5, sets the order of information according to the priority of the hierarchized information, and provides the recording list or reserved recording list UI on the screen in 3D in the multilayer structure.

Referring to FIG. 5, in association with the recording list UI, the electronic device may provide a recording program "Kung Fu Panda", 2 hours and 10 minutes, October 23, Friday, on an uppermost-level layer 511, a recording program, October 22, Thursday, on a next higher-level layer 512, and a recording program, October 19, Monday, on a lowermost-level layer 513 according to time information.

The page of each recording list may include a variety of information. For example, the electronic device 100 may provide at least one of a thumbnail image of the recording list, a title, time information associated with a recording capacity, information about a total reproduction time, information about a recording date, channel or program information associated with the recording list or a total amount of available storage unit, along with the UI. The electronic device 100 may further provide at least one of caption information, character information and provision server information. The electronic device 100 may provide codec information of a recording list in the page or a tool or information for changing a format based on the codec information, editing, division and deletion of a time and frame unit, transfer to another medium. The electronic device 100 may provide a tool and information for performing a Personal Video Recorder (PVR) function for the recording list of the page or a time-machine function. For example, the electronic device 100 may provide a tool for playing, fast forwarding or rewinding recorded material or for starting and playing a time-machine. When the recording list is selected, the electronic device 100 may provide information about the recorded material as an individual UI.

When a user selects a layer other than an uppermost-level layer, the electronic device 100 provides the layer as an uppermost-level layer and rearranges and provides the remaining layers. In this case, the layers may be rearranged by referring to the previously set order.

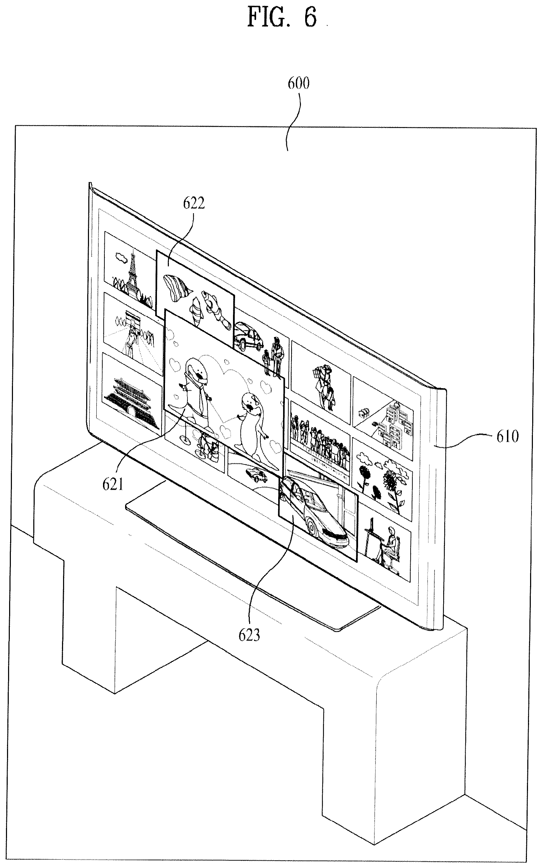

FIG. 6 is a diagram illustrating another example of a UI configured according to the present invention.

FIG. 6 shows an example of a channel browser UI of a multilayer structure according to the present invention.

When a request for provision of a channel browser UI is received from a user, the electronic device 100 collects information for configuring the channel browser UI according to the request. At this time, the electronic device 100 does not provide cells, that is, channels, of the channel browser on the same plane. That is, the electronic device 100 provides the cells in a multilayer structure based on the collected information according to the present invention.

The electronic device 100 first provides the horizontal channel browser UI according to a user request. At this time, if specific channels are selected, the electronic device 100 may sequentially configure and provide cells corresponding to the selected channels based on time information in a multilayer structure. The time information refers to, for example, the order of selected channels.

For example, it is assumed that a user selects cells 621 to 623 corresponding to three channels on a channel browser shown in FIG. 6. In this case, the electronic device may configure and provide the cells corresponding to the three channels in a multilayer structure. At this time, the selected channel cells may be configured on a higher-level layer of the first channel browser screen or the same layer of the first channel browser screen. As described above, a lastly selected cell may be arranged on an uppermost-level layer based on the time order of selected channels. The electronic device 100 may configure the selected channel cells to have different degrees of clearness or sizes. For example, since the channel cell lastly selected by the user corresponds to a channel cell in which the user is most interested, the electronic device 100 may configure the lastly selected channel cell to have a size greater than those of the other channel cells, a degree of clearness lower than those of the other channel cells, or a color different from those of the other channel cells. The degree of clearness, the color or the size may be set by the user or may be automatically set according to a predetermined criterion within the electronic device 100.

As described above, the channel browser UI including the cell UI having the layered structure is shown FIG. 6. In this case, since the channel cells selected by the user within the channel browser UI appear to protrude from the screen in the layered structure in the Z-axis direction, the user easily recognize and use the channel cells.

In addition, the cells selected from the channel browser UI configured as shown in FIG. 6 may be separately moved so as to configure a new channel browser or channel list UI. Although not shown, the electronic device 100 may provide the selected channels in a bookmark or tilt structure.

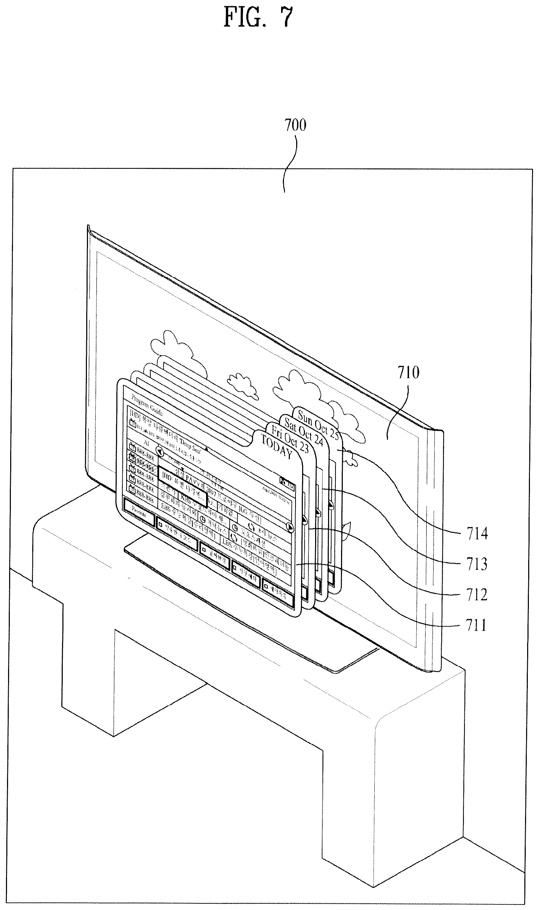

FIG. 7 is a diagram illustrating another example of a UI configured according to the present invention.

FIG. 7 shows an example of an 8-day broadcast guide UI of a multilayer structure according to the present invention. Accordingly, broadcast guide pages 711 to 714 may be configured and provided based on a predetermined criterion, for example, a date or a genre.

When a request for provision of the 8-day broadcast guide UI is received from a user, the electronic device 100 collects information according to the request and configures 8-day broadcast guide pages. The broadcast guide pages may be, for example, the same UI as a broadcast guide provided by the electronic device of the related art. When the user makes a request for the 8-day broadcast guide UI, it is impossible to simultaneously provide the 8-day broadcast guide UI on the screen. In order to make as much as possible of the 8-day broadcast guide UI viewable, the broadcast guide page of a specific date is too small to be identified. There is a limitation in configuring the 8-day broadcast guide UI as a main menu and a sub menu on a per date basis.

In the present invention, the broadcast guide pages are configured and provided in a multilayer structure, for example, as shown in FIG. 7. The broadcast guide pages 711 to 714 of the layers include a variety of information based on a genre or a date.

Referring to FIG. 7, the broadcast guide page of the uppermost-level layer 711 provides, for example, a channel for today and event information, that is, broadcast guide information of the channel, the broadcast guide page of a next higher-level layer 712 provides broadcast guide information for tomorrow, and a lowermost-level layer 714 provides broadcast guide information for a specific future date, for example, eight days in the future.

In this case, when the user selects the broadcast guide screen of another date in order to set reserved-recording, the electronic device 100 arranges the broadcast guide page of the selected date on an uppermost-level layer and sequentially arranges the broadcast guide pages after the broadcast guide page of the selected date using the conventional method, thereby providing the 8-day broadcast guide UI.

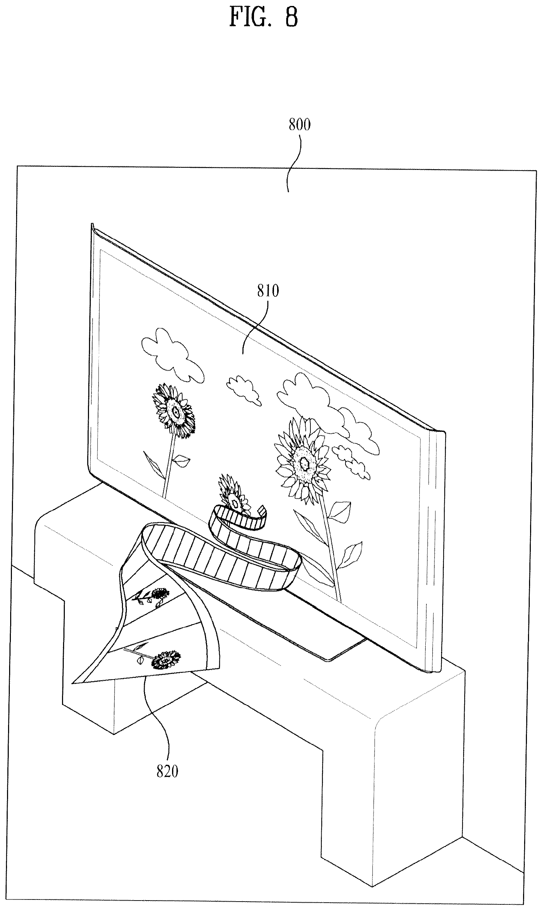

FIG. 8 is a diagram illustrating an example of indication information configured according to the present invention.

FIG. 8 shows indication information of a function which is currently being executed as the event in order to prevent information loss in association with a specific event according to the present invention.

For example, it is assumed that a specific event is currently being recorded according to a user request. In the electronic device of the related art, generally, information indicating that recording is currently being performed is displayed in a predetermined region of the screen using text. Although the information with a predetermined color is provided to the user at a specific position along with text information in the electronic device of the related art, it is difficult for the user to recognize the information due to interruption of a background screen or another UI. Accordingly, the user who does not recognize the information may erroneously make a request for other information, thereby causing a problem in the currently executed function, that is, the recording function.

In the present disclosure, in order to easily recognize and use the UI, the electronic device 100 configures the indication information using the UI of the 3D format such that the user can easily identify the currently executed function, thereby preventing the above-described problem.

The electronic device 100 provides an indication UI of a 3D format on the screen so as to prevent the user from erroneously changing the currently executed function, as described above. If the user makes a request for changing the currently executed function even when the indication UI of the 3D format is provided, the electronic device 100 may configure and provide a message UI for identifying the change of the function so as to minimize errors of the currently executed function.

When a specific program is recorded, the electronic device 100 may configure and provide an indication UI for indicating that a recording function is currently being executed as an event in a shape in which a film appears to protrude from the screen as shown in FIG. 8. In this case, the electronic device 100 may provide text information indicating that the recording function is being performed in a specific region of the screen 810 along with the indication UI, similar to the related art. Then, the user can easily recognize that the recording function is currently being executed as the event. Therefore, it is possible to easily recognize the currently executed function using the 3D UI configured according to the present invention, to suppress errors, and to improve access convenience and readability. A thumbnail image or program title information may be periodically provided through the film of the UI 820.

How the information about a specific UI is configured on one screen has been described above, in order to enable the user to easily recognize and conveniently use the UI. Such a principle may be equally provided to a main menu UI. For example, when a user makes a request for a main menu UI, the electronic device 100 provides information provided in the main menu UI, for example, broadcast guide information, a channel browser, a channel list, a favorite channel list, and a recording/reserved-recording list in a multilayer structure. Information of each layer may be set by various methods. When a specific layer is selected, the electronic device 100 may provide the UI using any one of methods shown in FIGs. 4 to 8 according to the characteristics of the item or the page of the layer.

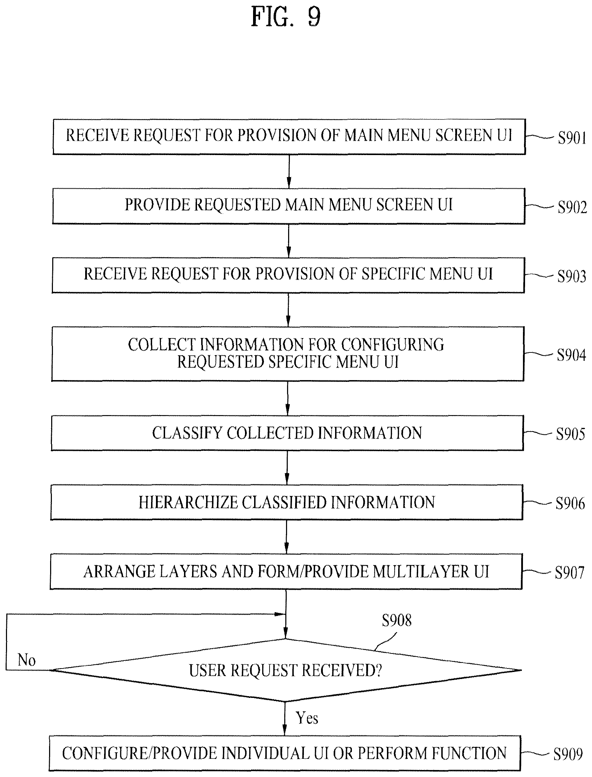

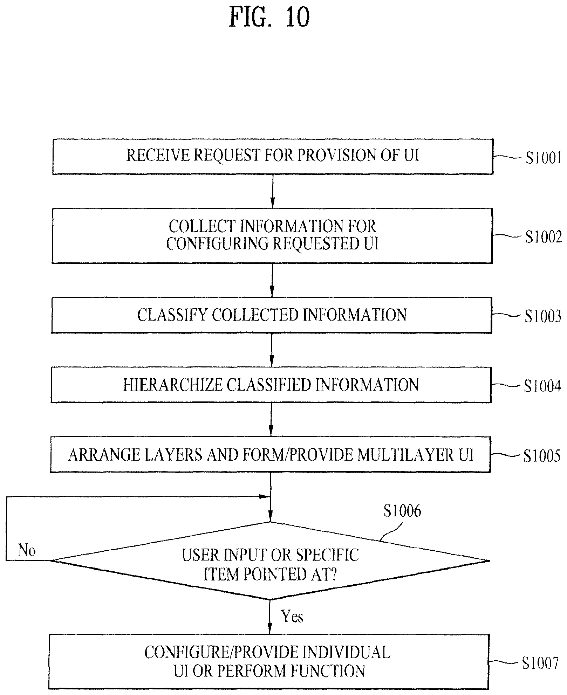

FIGs. 9 and 10 are flowcharts illustrating a method for controlling a UI according to the present invention. In particular, FIG. 9 shows the case where a UI is controlled when a request for a first main menu UI is made and FIG. 10 shows the case where a UI is controlled when a request for a first specific function is directly made. In FIGs. 9 and 10, the request may be input in various manners using a general remote controller, a motion controller, a pointing device, a touch screen, a touch pad or voice, as described above.

An example of a method of providing a UI in an electronic device 100 according to the present invention includes receiving a request for provision of a UI, collecting information configuring the requested UI, classifying the collected information according to a first criterion so as to generate a plurality of pages, hierarchizing the generated pages, arranging layers according to a second criterion so as to form a multilayer UI, and providing the formed multilayer UI as the requested UI.

Referring to FIG. 9, the electronic device 100 receives a request for provision of a main menu screen UI from the user (S901). The electronic device 100 provides the main menu screen UI through OSD screen according to the request (S902) and receives a request for provision of the UI shown in at least one of FIGs. 4 to 8 from the provided main menu screen UI (S903). The electronic device 100 collects information about the specific UI requested in step S903 (S904). The electronic device 100 classifies the collected information about the specific UI (S905) and hierarchizes the classified information so as to match the layers (S906). The electronic device 100 arranges the layers according to a specific criterion so as to form a multilayer UI and provides the multilayer UI through OSD screen (S907). The electronic device 100 determines whether or not a user request is received with respect to the UI provided through the OSD screen in step S907 (S908) and provides the UI associated with the request or performs the function corresponding thereto as the determination result (S909).

Referring to FIG. 10, the electronic device 100 receives a request for provision of a UI shown in at least one of FIGs. 4 to 8 from the user (S1001). The electronic device 100 collects information for configuring the specific UI requested in step S1001 (S1002). The electronic device 100 classifies the collected information about the specific UI (S1003) and hierarchizes the classified information so as to match the layers (S1004). The electronic device 100 arranges the layers according to a specific criterion so as to form a multilayer UI and provides the multilayer UI using the screen (S1005). The electronic device 100 determines whether or not the user makes a request for a specific function or points a specific item or page with respect to the UI provided using the screen in step S1005 (S1006) and performs the specific function requested by the user or provides the individual UI for the pointed specific item or page as the determination result (S1007).

According to the above-described present invention, since the information configuring the UI is classified and hierarchized according to the predetermined criterion and the UI having the multilayer structure configured through hierarchization is provided to the user according to a specific criterion such as a date, a genre, a time or a favorite in the Z-axis direction, it is possible to enable the user to easily recognize and conveniently use the UI so as to induce the user to buy a product.

The method for operating the augmented remote controller according to the foregoing exemplary embodiments may be implemented as code that can be written on a computer-readable recording medium and can thus be read by a processor. The computer-readable recording medium may be any type of recording device in which data is stored in a computer-readable manner. Examples of the computer-readable recording medium include a Read Only Memory (ROM), a Random Access Memory (RAM), a Compact Disc (CD)-ROM, a magnetic tape, a floppy disc, an optical data storage, and a carrier wave (e.g., data transmission through the Internet). The computer-readable recording medium can be distributed over a plurality of computer systems connected to a network so that computer-readable code is written thereto and executed therefrom in a decentralized manner. Functional programs, code, and code segments needed to realize the embodiments herein can be construed by one of ordinary skill in the art.

## Claims

1. A method for providing a User Interface, UI, in a television, the method comprising:
receiving (S901-S903; S1001) a request for provision of the UI;
collecting (S904; S1002) information for configuring the requested UI;
classifying (S905; S1003) the collected information according to a first criterion so as to generate a plurality of pages; and
displaying (S907; S1005) the generated pages according to a second criterion so as to form a multilayer UI as the requested UI,
**characterized in that** the formed multilayer UI is received from a formatter (119) which further generates a synchronization signal (Vsync) in order to perform synchronization when a user views 3D image data with glasses (121), wherein the formatter outputs the synchronization signal to an infrared, IR, emitter included in the glasses,
the method further comprising:
receiving (S908; S1006) a request signal for selecting a specific layer;
changing the second criterion corresponding to the request signal; and
rearranging the layers according to the second criterion so as to form an individual UI,
wherein the first criterion and the second criterion are set by the user or are automatically set according to a predetermined criterion and include at least one of a date, a genre, a time, a favorite and a user ID,
wherein information about each layer configuring the multilayer UI is divided and provided according to each of different users using the television,
wherein an uppermost-level layer provides a favorite channel information of a first user and a next layer provides a favorite channel information of a second user,
wherein the favorite channel information includes information for identifying whether the favorite channel information is information about a terrestrial wave, a cable or an internet protocol television, IPTV,
wherein the favorite channel information is provided along with program information of a virtual channel.

2. The method according to claim 1, wherein the UI has a three-dimensional, 3D, format and includes at least one of a main menu UI or a specific function request UI, and wherein the specific function request UI includes at least one of a channel list UI, a favorite channel list UI, a recording list request UI, a reserved recording list request UI, a channel browser UI and a broadcast guide UI.

3. The method according to claim 2, wherein each of the layers configuring the multilayer UI is hierarchized by a disparity between left image data and right image data of a page corresponding to the layer, and wherein the layers configuring the multilayer UI are different in at least one of a degree of clearness, size and color.

4. The method according to claim 3, wherein the layers configuring the multilayer UI are configured such that at least parts of the IDs of the layers overlap each other, for convenience of access to another layer.

5. The method according to claim 1, wherein, if a specific function is being performed, the television provides a 3D indication UI indicating that the function is currently being executed, and the provided 3D indication UI includes at least one of a thumbnail image and title information in the form of a film.

6. A television for providing a User Interface, UI, comprising:
a reception unit configured to receive a request for provision of the UI;
a control unit configured to collect information for configuring the requested UI, classify the collected information according to a first criterion so as to generate a plurality of pages, display the generated pages according to a second criterion so as to form a multilayer UI, change the second criterion corresponding to a request signal for selecting a specific layer and rearrange the layers according to the changed second criterion so as to form an individual UI,
an output unit configured to provide the formed multilayer UI as the requested UI and the formed individual UI,
wherein the formed multilayer UI is received from a formatter (119), which further generates a synchronization signal (Vsync) in order to perform synchronization when a user views 3D image data with glasses (121), wherein the formatter outputs the synchronization signal to an infrared, IR, emitter included in the glasses,
wherein the control unit sets the first criterion and the second criterion by the user or automatically sets the first criterion and the second criterion according to a predetermined criterion, and include at least one of date, genre, time, favorite and user ID,
wherein information about each layer configuring the multilayer UI is divided and provided according to each of different users using the television,
wherein an uppermost-level layer provides a favorite channel information of a first user and a next layer provides a favorite channel information of a second user,
wherein the favorite channel information includes information for identifying whether the favorite channel information is information about a terrestrial wave, a cable or an internet protocol television, IPTV,
wherein the favorite channel information is provided along with program information of a virtual channel.

7. The television according to claim 6, wherein the requested UI includes at least one of a main menu UI or a specific function request UI and the control unit configures the UI in three dimensions, 3D, and wherein the control unit configures at least one of a channel list UI, a favorite channel list UI, a recording list request UI, a reserved recording list request UI, a channel browser UI and a broadcast guide UI as the specific function request UI.

8. The television according to claim 7, wherein the control unit controls a disparity between left image data and right image data of a page corresponding to each of the layers configuring the multilayer UI so as to control hierarchization, and wherein the control unit differently controls at least one of degrees of clearness, sizes and colors of the layers configuring the multilayer UI.

9. The television according to claim 8, wherein the control unit configures the layers configuring the multilayer UI such that at least parts of IDs of the layers overlap each other, for convenience of access to another layer.

10. The television according to claim 6, wherein, if a specific function is being performed, the control unit provides a 3D indication UI indicating that the function is currently being executed, and the provided 3D indication UI includes at least one of a thumbnail image and title information in the form of a film.

## Patentansprüche

1. Verfahren zum Bereitstellen einer Benutzerschnittstelle, UI, in einem Fernsehgerät, wobei das Verfahren die Schritte aufweist:
Empfangen (S901-S903; S1001) einer Anforderung zum Bereitstellen der UI;
Sammeln (S904; S1002) von Information zum Konfigurieren der angeforderten UI;
Klassifizieren (S905; S1003) der gesammelten Information gemäß einem ersten Kriterium, um mehrere Seiten zu erzeugen; und
Anzeigen (S907; S1005) der erzeugten Seiten gemäß einem zweiten Kriterium, um eine mehrschichtige UI als die angeforderte UI zu bilden;
**dadurch gekennzeichnet, dass**
die gebildete mehrschichtige UI von einem Formatierer (119) empfangen wird, der ferner ein Synchronisationssignal (Vsync) erzeugt, um eine Synchronisation auszuführen, wenn ein Benutzer 3D-Bilddaten mit einer Brille (121) betrachtet, wobei der Formatierer das Synchronisationssignal an einen in der Brille vorgesehenen Infrarot-, IR-, Emitter ausgibt,
wobei das Verfahren ferner aufweist:
Empfangen (S908; S1006) eines Anforderungssignals zum Auswählen einer spezifischen Schicht;
Ändern des zweiten Kriteriums entsprechend dem Anforderungssignal; und
Umorganisieren der Schichten gemäß dem zweiten Kriterium, um eine individuelle UI zu bilden,
wobei das erste Kriterium und das zweite Kriterium durch den Benutzer festgelegt werden oder gemäß einem vorgegebenen Kriterium automatisch gesetzt werden und mindestens ein Element unter einem Datum, einem Genre, einer Zeit, einem Favoriten und einer Benutzer-ID aufweisen,
wobei Information über jede Schicht, die die mehrschichtige UI konfigurieren, entsprechend jedem von verschiedenen Benutzern, die das Fernsehgerät nutzen, geteilt und bereitgestellt wird,
wobei eine Schicht einer obersten Ebene Favoriten-Kanalinformation eines ersten Benutzers und eine nächste Schicht Favoriten-Kanalinformation eines zweiten Benutzers bereitstellt,
wobei die Favoriten-Kanalinformation Information aufweist, die anzeigt, ob die Favoriten-Kanalinformation Information über terrestrisches Fernsehen, Kabel- oder Internetprotokollfernsehen, IPTV, enthält, und
wobei die Favoriten-Kanalinformation zusammen mit Programminformation eines virtuellen Kanals bereitgestellt wird.

2. Verfahren nach Anspruch 1, wobei die UI ein dreidimensionales, 3D-, Format aufweist und eine Hauptmenü-UI und/oder eine UI zum Anfordern einer spezifischen Funktion aufweist, und wobei die UI zum Anfordern einer spezifischen Funktion mindestens ein Element unter einer Kanallisten-UI, einer Favoriten-Kanallisten-UI, einer Aufzeichnungslistenanforderungs-UI, einer UI zum Anfordern einer Liste für reservierte Aufzeichnungen, einer Kanal-Browser-UI und einer Programmführungs-UI aufweist.

3. Verfahren nach Anspruch 2, wobei jede der Schichten, die die mehrschichtige UI konfigurieren, durch eine Ungleichheit zwischen linken Bilddaten und rechten Bilddaten einer der Schicht entsprechenden Seite hierarchisiert ist, und wobei die Schichten, die die mehrschichtige UI konfigurieren, sich in mindestens einem Parameter unter dem Schärfegrad, der Größe und der Farbe unterscheiden.

4. Verfahren nach Anspruch 3, wobei die Schichten, die die mehrschichtige UI konfigurieren, derart konfiguriert sind, dass mindestens Teile der IDs der Schichten sich einander überlappen, um den Zugang zu einer anderen Schicht zu erleichtern.

5. Verfahren nach Anspruch 1, wobei, wenn eine spezifische Funktion ausgeführt wird, das Fernsehgerät eine 3D-Anzeige-UI bereitstellt, die anzeigt, dass die Funktion gerade ausgeführt wird, und wobei die bereitgestellte 3D-Anzeige-UI ein Miniaturbild und/oder Titelinformation in Form eines Films aufweist.

6. Fernsehgerät zum Bereitstellen einer Benutzerschnittstelle, UI, mit:
einer Empfangseinheit, die dafür konfiguriert ist, eine Anforderung zum Bereitstellen der UI zu empfangen;
einer Steuereinheit, die dafür konfiguriert ist, Information zum Konfigurieren der angeforderten UI zu sammeln, die gesammelte Information gemäß einem ersten Kriterium zu klassifizieren, um mehrere Seiten zu erzeugen, die erzeugten Seiten gemäß einem zweiten Kriterium anzuzeigen, um eine mehrschichtige UI zu bilden, das zweite Kriterium entsprechend einem Anforderungssignal zum Auswählen einer spezifischen Schicht zu ändern und die Schichten gemäß dem geänderten zweiten Kriterium neu zu organisieren, um eine individuelle UI zu bilden; und
einer Ausgabeeinheit, die dafür konfiguriert ist, die gebildete mehrschichtige UI als die angeforderte UI und die gebildete individuelle UI bereitzustellen,
wobei die gebildete mehrschichtige UI von einem Formatierer (119) empfangen wird, der ferner ein Synchronisationssignal (Vsync) erzeugt, um eine Synchronisation auszuführen, wenn ein Benutzer 3D-Bilddaten mit einer Brille (121) betrachtet, wobei der Formatierer das Synchronisationssignal an einen in der Brille vorgesehenen Infrarot-, IR-, Emitter ausgibt,
wobei das erste Kriterium und das zweite Kriterium in der Steuereinheit durch den Benutzer festgelegt oder automatisch gesetzt werden und mindestens einen Parameter unter einem Datum, einem Genre, einer Zeit, einem Favoriten und einer Benutzer-ID aufweisen,
wobei Information über jede Schicht, die die mehrschichtige UI konfigurieren, entsprechend jedem von verschiedenen Benutzern, die das Fernsehgerät nutzen, geteilt und bereitgestellt wird,
wobei eine Schicht einer obersten Ebene Favoriten-Kanalinformation eines ersten Benutzers und eine nächste Schicht Favoriten-Kanalinformation eines zweiten Benutzers bereitstellt,
wobei die Favoriten-Kanalinformation Information aufweist, die anzeigt, ob die Favoriten-Kanalinformation Information über terrestrisches Fernsehen, Kabel- oder Internetprotokollfernsehen, IPTV, enthält, und
wobei die Favoriten-Kanalinformation zusammen mit Programminformation eines virtuellen Kanals bereitgestellt wird.

7. Fernsehgerät nach Anspruch 6, wobei die angeforderte UI eine Hauptmenü-UI und/oder eine UI zum Anfordern einer spezifischen Funktion aufweist, und wobei die Steuereinheit die UI in drei Dimensionen, 3D, konfiguriert, und wobei die Steuereinheit mindestens eine UI unter einer Kanallisten-UI, einer Favoriten-Kanallisten-UI, einer Aufzeichnungslistenanforderungs-UI, einer UI zum Anfordern einer Liste für reservierte Aufzeichnungen, einer Kanal-Browser-UI und einer Programmführungs-UI als die UI zum Anfordern einer spezifischen Funktion konfiguriert.

8. Fernsehgerät nach Anspruch 7, wobei die Steuereinheit eine Ungleichheit zwischen linken Bilddaten und rechten Bilddaten einer Seite steuert, die jeder der Schichten entspricht, die die mehrschichtige UI konfigurieren, um eine Hierarchisierung zu steuern, und wobei die Steuereinheit mindestens einen Parameter unter dem Schärfegrad, der Größe und der Farbe der Schichten, die die mehrschichtige UI konfigurieren, unterschiedlich steuert.

9. Fernsehgerät nach Anspruch 8, wobei die Steuereinheit die Schichten, die die mehrschichtige UI konfigurieren, derart konfiguriert, dass mindestens Teile von IDs der Schichten sich einander überlappen, um den Zugriff auf eine andere Schicht zu erleichtern.

10. Fernsehgerät nach Anspruch 6, wobei, wenn eine spezifische Funktion ausgeführt wird, die Steuereinheit eine 3D-Anzeige-UI bereitstellt, die anzeigt, dass die Funktion gerade ausgeführt wird, und wobei die bereitgestellte 3D-Anzeige-UI ein Miniaturbild und/oder Titelinformationen in Form eines Films aufweist.

## Revendications

1. Procédé de fourniture d'une interface utilisateur, UI (« User Interface »), dans une télévision, le procédé comprenant :
recevoir (S901-S903 ; S1001) une demande de fourniture de l'UI ;
collecter (S904 ; S1002) de l'information pour configurer l'UI demandée ;
classifier (S905 ; S1003) l'information collectée selon un premier critère de façon à générer une pluralité de pages ; et
afficher (S907 ; S1005) les pages générées selon un second critère de façon à former une UI multicouche en tant qu'UI demandée,
**caractérisé en ce que** l'UI multicouche formée est reçue depuis un formateur (119) qui génère en outre un signal de synchronisation (Vsync) afin d'effectuer une synchronisation lorsqu'un utilisateur visualise des données d'image tridimensionnelle avec des lunettes (121), le formateur délivrant le signal de synchronisation vers un émetteur infrarouge, IR, compris dans les lunettes,
le procédé comprenant en outre :
recevoir (S908 ; S1006) un signal de demande pour sélectionner une couche spécifique ;
changer le second critère correspondant au signal de demande ; et
réagencer les couches selon le second critère de façon à former une UI individuelle,
dans lequel le premier critère et le second critère sont fixés suivant l'utilisateur ou sont automatiquement fixés selon un critère prédéterminé et comprennent au moins un élément parmi une date, un genre, une heure, un favori et un ID d'utilisateur,
dans lequel de l'information sur chaque couche configurant l'UI multicouche est divisée et fournie selon chaque utilisateur parmi différents utilisateurs utilisant la télévision,
dans lequel une couche de niveau supérieur fournit une information de chaîne favorite d'un premier utilisateur et une couche suivante fournit une information de chaîne favorite d'un second utilisateur,
dans lequel l'information de chaîne favorite comprend de l'information pour identifier si l'information de chaîne favorite est une information concernant des ondes terrestres, un câble ou une télévision sur protocole Internet, IPTV (« internet protocol télévision »),
dans lequel l'information de chaîne favorite est fournie avec de l'information de programme d'une chaîne virtuelle.

2. Procédé selon la revendication 1, dans lequel l'UI a un format tridimensionnel, 3D, et comprend au moins une interface parmi une UI de menu principal ou une UI de demande de fonction spécifique, et dans lequel l'UI de demande de fonction spécifique comprend au moins une interface parmi une UI de liste de chaînes, une UI de liste de chaînes favorites, une UI de demande de liste d'enregistrement, une UI de demande de liste d'enregistrement réservée, une UI de navigateur de chaîne et une UI de guide de diffusion.

3. Procédé selon la revendication 2, dans lequel chacune des couches configurant l'UI multicouche est hiérarchisée par une disparité entre des données d'image de gauche et des données d'image de droite d'une page correspondant à la couche, et dans lequel les couches configurant l'UI multicouche sont différentes en au moins paramètre parmi un degré de clarté, une taille et une couleur.

4. Procédé selon la revendication 3, dans lequel les couches configurant l'UI multicouche sont configurées de telle sorte qu'au moins des parties des identifiants des couches se chevauchent mutuellement, par commodité d'accès à une autre couche.

5. Procédé selon la revendication 1, dans lequel, si une fonction spécifique est en cours de réalisation, la télévision fournit une UI d'indication 3D indiquant que la fonction est actuellement en cours d'exécution, et l'UI d'indication 3D fournie comprend au moins un élément parmi une image miniature et une information de titre sous la forme d'un film.

6. Télévision pour fournir une interface utilisateur, UI (« User Interface »), comprenant :
une unité de réception configurée pour recevoir une demande de fourniture de l'UI ;
une unité de commande configurée pour collecter des informations pour configurer l'UI demandée, classifier les informations collectées selon un premier critère de façon à générer une pluralité de pages, afficher les pages générées selon un second critère de façon à former une UI multicouche, changer le second critère correspondant à un signal de demande pour sélectionner une couche spécifique et réagencer les couches selon le second critère changé de façon à former une UI individuelle,
une unité de sortie configurée pour fournir l'UI multicouche formée en tant qu'UI demandée et UI individuelle formée,
dans laquelle l'UI multicouche formée est reçue depuis un formateur (119) qui génère en outre un signal de synchronisation (Vsync) afin d'effectuer une synchronisation lorsqu'un utilisateur visualise des données d'image tridimensionnelles avec des lunettes (121), le formateur délivrantle signal de synchronisation vers un émetteur infrarouge compris dans les lunettes,
dans laquelle l'unité de commande fixe le premier critère et le second critère suivant l'utilisateur ou fixe automatiquement le premier critère et le second critère selon un critère prédéterminé, en incluant au moins un élément parmi une date, un genre, une heure, un favori et un ID d'utilisateur,
dans laquelle l'information concernant chaque couche configurant l'UI multicouche est divisée et fournie selon chaque utilisateur parmi différents utilisateurs utilisant la télévision,
dans laquelle une couche de niveau supérieur fournit une information de chaîne favorite d'un premier utilisateur et une couche suivante fournit une information de chaîne favorite d'un second utilisateur,
dans laquelle l'information de chaîne favorite comprend de l'information pour identifier si l'information de chaîne favorite est une information concernant des ondes terrestres, un câble ou une télévision sur protocole Internet, IPTV (« internet protocol télévision »),
dans laquelle l'information de chaîne favorite est fournie avec de l'information de programme d'une chaîne virtuelle.

7. Télévision selon la revendication 6, dans laquelle l'UI demandée comprend au moins une interface parmi une UI de menu principal ou une UI de demande de fonction spécifique et l'unité de commande configure l'UI en trois dimensions, 3D, et dans laquelle l'unité de commande configure au moins une interface parmi une UI de liste de chaînes, une UI de liste de chaînes favorites, une UI de demande de liste d'enregistrement, une UI de demande de liste d'enregistrement réservée, une UI de navigateur de chaîne et une UI de guide de diffusion en tant qu'UI de demande de fonction spécifique.

8. Télévision selon la revendication 7, dans laquelle l'unité de commande commande une disparité entre des données d'image de gauche et des données d'image de droite d'une page correspondant à chacune des couches configurant l'UI multicouche de façon à commander une hiérarchisation, et dans laquelle l'unité de commande commande de manière différente au moins paramètre parmi des degrés de clarté, des tailles et des couleurs des couches configurant l'UI multicouche.

9. Télévision selon la revendication 8, dans laquelle l'unité de commande configure les couches configurant l'UI multicouche de telle sorte qu'au moins des parties des identifiants des couches se chevauchent mutuellement, par commodité à une autre couche.

10. Télévision selon la revendication 6, dans laquelle, si une fonction spécifique est en cours de réalisation, l'unité de commande fournit une UI d'indication 3D indiquant que la fonction est actuellement en cours d'exécution, et l'UI d'indication 3D fournie comprend au moins un élément parmi une image miniature et une information de titre sous la forme d'un film.
